# EUROPEAN PATENT APPLICATION

(11) **EP 4 541 849 A1**
(43) Date of publication of application: **23.04.2025**
(21) Application number: 23823877.8
(22) Date of filing: 12.06.2023
(51) Int. Cl.: C08L 23/10, C08K 3/013, C08K 3/26, C08K 3/34, C08K 7/14, C08L 23/16, C08L 23/26, C08L 51/08, C08L 53/00, C08L 53/02, C08L 77/00

(54) **FILLER-CONTAINING POLYPROPYLENE RESIN COMPOSITION**

(30) Priority: 14.06.2022 JP 2022095948; 18.04.2023 JP 2023067852
(71) Applicant: Mitsui Chemicals, Inc., Tokyo 104-0028 (JP)
(72) Inventor: KUBOTA Naoya, Sodegaura-shi, Chiba 299-0265 (JP); NOZAKI Shuhei, Ichihara-shi, Chiba 299-0108 (JP); NAKAMURA Tetsuya, Ichihara-shi, Chiba 299-0108 (JP); UCHIDA Kiminori, Sodegaura-shi, Chiba 299-0265 (JP)
(74) Representative: Hoffmann Eitle
(86) International application number: PCT/JP2023/021701
(87) International publication number: WO 2023/243587

(57) **Abstract**

A polypropylene resin composition containing a filler-containing propylene-based polymer composition, a polyamide resin, and a modified elastomer, the polypropylene resin composition being excellent in terms of the balance between stiffness and impact resistance is provided.

A polypropylene resin composition containing a propylene-based polymer composition (a), a polyolefin composition (b), and an acid-modified polypropylene (c), wherein the propylene-based polymer composition (a) contains a propylene-based polymer (a1) and a filler (a2), the polyolefin composition (b) contains a polyolefin (b1), an aliphatic polyamide resin (b2), and a modified elastomer (b3) and has a specific phase structure, and the modified elastomer (b3) is an elastomer in which a portion containing a group having reactivity against the aliphatic polyamide resin (b2) is added to a specific non-modified elastomer (b3').

## Description

### Technical Field

The present invention relates to a polypropylene resin composition containing a filler-containing propylene-based polymer composition and a polyamide resin.

### Background Art

Resin compositions containing a propylene-based polymer, a polyamide resin, and a modified elastomer into which an acid group such as an acid anhydride group has been introduced, which plays a role of a compatibilizer, have been studied as resins having improved impact resistance, and it has been revealed that a specific phase structure is formed (for example, refer to Patent Literature 1 to 4).

In addition, for the purpose of improving impact resistance and stiffness, resin compositions containing a propylene-based polymer, a polyamide resin containing a filler (for example, an inorganic filler, a natural fiber or the like), and a modified elastomer having a group with reactivity against the polyamide resin are being studied.

### Citation List

### Patent Literature

[Patent Literature 1] WO 2013/094763
[Patent Literature 2] WO 2013/094764
[Patent Literature 3] WO 2018/139378
[Patent Literature 4] WO 2018/135648

### Summary of Invention

### Technical Problem

For the purpose of further improving the physical properties (for example, impact resistance) of a resin composition containing a propylene-based polymer, a polyamide resin, and a modified elastomer, it is also considered to study a resin composition containing a filler-containing propylene-based polymer composition, which is obtained by adding a filler to a propylene-based polymer, a polyamide resin, and a modified elastomer. However, according to the present inventors' studies, it has become clear that, even when simply a resin composition containing a filler-added propylene-based polymer, a polyamide resin, and a modified elastomer is produced, the stiffness significantly deteriorates, and it has been clarified that additional improvement is required to put the resin composition into practical use.

An object of the present invention is to provide a polypropylene resin composition containing a propylene-based polymer composition containing a filler (for example, an inorganic filler, a natural fiber, or the like), a polyamide resin, and a modified elastomer, the polypropylene resin composition being excellent in terms of the balance between stiffness and impact resistance.

### Solution to Problem

As a result of studies in such a situation, the present inventors found that, according to a propylene-based polymer composition containing a polyolefin composition containing a filler-containing propylene-based polymer composition, a polyolefin, an aliphatic polyamide resin, and a modified elastomer and, furthermore, an acid-modified propylene and having a specific phase structure, the above-described problem can be solved and completed the present invention.

That is, the present invention relates to, for example, the following [1] to [11].
[1] A polypropylene resin composition, containing a propylene-based polymer composition (a), a polyolefin composition (b), and an acid-modified polypropylene (c),
   wherein the propylene-based polymer composition (a) contains a propylene-based polymer (a1) and a filler (a2),
   the polyolefin composition (b) contains a polyolefin (b1), an aliphatic polyamide resin (b2), and a modified elastomer (b3) and
   has a continuous phase (α) containing the polyolefin (b1), and a dispersed phase (β) containing the aliphatic polyamide resin (b2) and the modified elastomer (b3) and dispersed in the continuous phase (α),
   the dispersed phase (β) is composed of a melt-kneaded product of the aliphatic polyamide resin (b2) and the modified elastomer (b3),
   the modified elastomer (b3) is an elastomer in which a portion containing a group having reactivity against the aliphatic polyamide resin (b2) is added to a non-modified elastomer (b3'), and the non-modified elastomer (b3') is an olefin-based thermoplastic elastomer having a structural unit derived from ethylene and a structural unit derived from an α-olefin having 3 to 8 carbon atoms, or a styrene-based thermoplastic elastomer having a structural unit derived from a styrene-based compound, and
   based on a sum of the continuous phase (α) and the dispersed phase (β) of 100 mass%, the dispersed phase (β) is 80 mass% or less.
[2] The polypropylene resin composition according to [1], wherein the filler (a2) is an inorganic filler (a2-1).
[3] The polypropylene resin composition according to [1], wherein the filler (a2) is a natural fiber (a2-2).
[4] The polypropylene resin composition according to any one of [1] to [3], wherein the propylene-based polymer (a1) is a propylene/ethylene block copolymer having a dispersed phase of an ethylene polymer block.
[5] The polypropylene resin composition according to [2] or [4], wherein the inorganic filler (a2-1) is one or more inorganic fillers selected from the group consisting of talc, mica, a glass fiber, and calcium carbonate.
[6] The polypropylene resin composition according to [3] or [4], wherein the natural fiber (a2-2) is one or more natural fibers selected from the group consisting of a cellulose fiber, a wood powder, and a wood powder fiber.
[7] The polypropylene resin composition according to any one of [1] to [6], wherein the polyolefin (b1) is a propylene homopolymer.
[8] The polypropylene resin composition according to any one of [1] to [7], wherein the aliphatic polyamide resin (b2) is one or more aliphatic polyamide resins selected from the group consisting of Polyamide 6, Polyamide 11, Polyamide 12, Polyamide 612, Polyamide 610, and Polyamide 1010.
[9] The polypropylene resin composition according to any one of [1] to [8], wherein the dispersed phase (β) has a continuous phase (β1) containing the aliphatic polyamide resin (b2), and a fine dispersed phase (β2) containing the modified elastomer (b3) and dispersed in the continuous phase (β1).
[10] The polypropylene resin composition according to any one of [1] to [9], wherein a content of the propylene-based polymer composition (a) is 50 to 94.9 parts by mass, a content of the polyolefin composition (b) is 5 to 49.9 parts by mass, and a content of the modified polypropylene (c) is 0.1 to 15 parts by mass, provided that a total content of the propylene-based polymer composition (a), the polyolefin composition (b), and the modified polypropylene (c) is 100 parts by mass.
[11] The polypropylene resin composition according to any one of [1] to [9], wherein a content of the propylene-based polymer composition (a) is 50 to 94.9 parts by mass, a content of the polyolefin composition (b) is 5 to 49.9 parts by mass, and a content of the modified polypropylene (c) is 0.1 to 5 parts by mass, provided that a total content of the propylene-based polymer composition (a), the polyolefin composition (b), and the modified polypropylene (c) is 100 parts by mass.

### Advantageous Effects of Invention

According to the present invention, a polypropylene resin composition containing a filler-containing propylene-based polymer composition, a polyamide resin, and a modified elastomer, the polypropylene resin composition being excellent in terms of the balance between stiffness and impact resistance is provided.

### Description of Embodiments

Hereinafter, the present invention will be described.

### <<Polypropylene resin composition>>

A polypropylene resin composition according to the present invention contains a propylene-based polymer composition (a), a polyolefin composition (b), and an acid-modified polypropylene (c).

### <Propylene-based polymer composition (a)>

The propylene-based polymer composition (a) that is used in the present invention contains a propylene-based polymer (a1) and a filler (a2).

### [Propylene-based polymer (a1)]

The propylene-based polymer (a1) is not particularly limited as long as the propylene-based polymer (a1) is a polymer mainly including a structural unit derived from propylene (typically, including more than 50 mol% of a structural unit derived from propylene) and may be a propylene homopolymer or a copolymer of propylene and an α-olefin other than propylene (hereinafter, also referred to as "different α-olefin") (hereinafter, also referred to as "propylene/α-olefin copolymer"). The propylene/α-olefin copolymer may be a propylene/α-olefin block copolymer or a propylene/α-olefin random copolymer.

Examples of the different α-olefin include ethylene and α-olefins having 4 to 20 carbon atoms such as ethylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, 4-methyl-1-pentene, 2-methyl-1-butene, 3-methyl-1-butene, 3-methyl-1-butene, 3,3-dimethyl-1-butene, 3-methyl-1-pentene, 3-methyl-1-hexene, and 3,5,5-trimethyl-1-hexene.

Among these, as the different α-olefin, ethylene and 1-butene are preferable, and ethylene is more preferable.

Preferable specific examples of the propylene/α-olefin copolymer include propylene/ethylene copolymers and propylene/1-butene copolymers, and propylene/ethylene copolymers are preferable.

The propylene-based polymer (a1) is preferably a propylene/ethylene block copolymer having a dispersed phase of an ethylene polymer from the viewpoint of the more superior balance between the stiffness and impact resistance of the resulting polypropylene resin composition.

As a monomer that is a raw material of the propylene-based polymer (a1), for example, a fossil fuel-derived monomer may be used, a biomass-derived monomer may be used, and a fossil fuel-derived monomer and a biomass-derived monomer may be used. These monomers may be used singly, or two or more thereof may be used.

The amount of a decane soluble part at room temperature (23°C) of the propylene-based polymer (a1) is preferably 5 mass% to 30 mass% relative to the total mass of the propylene-based polymer (a1).

The decane soluble part at room temperature (23°C) indicates a component soluble in n-decane at 23°C when the propylene-based polymer (a1) has been separated with a n-decane solvent (hereinafter, also referred to as "decane soluble part"). In addition, the decane insoluble part at room temperature (23°C) indicates a component insoluble in n-decane at 23°C when the propylene-based polymer (a1) has been separated with a n-decane solvent (hereinafter, also referred to as "decane insoluble part").

The amount of decane soluble part and the amount of decane insoluble part are measured by the following method.

### (Proportion of n-decane soluble (insoluble) component at 23°C)

About 3 g of a propylene-based polymer, 500 ml of n-decane, and a small amount of a heat-resistant stabilizer soluble in n-decane are loaded into a glass measurement vessel, and the propylene-based polymer was dissolved by being heated to 150°C over 2 hours while being stirred with a stirrer in a nitrogen atmosphere, then maintained at 150°C for 2 hours, and gradually cooled to 23°C over 8 hours. The resulting liquid containing precipitates of the propylene-based polymer was subjected to filtration under reduced pressure with a 25G-4 standard glass filter manufactured by Iwata Glass Industrial Co., Ltd. 100 ml of the filtrate was collected, and this was dried under reduced pressure to obtain a part of a n-decane soluble component. After this operation, the proportion (mass%) of the n-decane soluble component and the proportion (mass%) of an insoluble component at 23°C were determined by the following equations. The mass of the propylene-based polymer was measured up to a unit of 10⁻⁴ g, and this mass was denoted as b (g) in the following equations. In addition, the mass of the part of the decane soluble component was measured up to a unit of 10⁻⁴ g, and this mass was denoted as a (g) in the following equations. Proportion (mass%) of n-decane soluble component at 23°C = 100 × (500 × a)/(100 × b) Proportion (mass%) of n-decane insoluble component at 23°C = 100 - 100 × (500 × a)/(100 × b)

Regarding the amount of the decane soluble part, relative to the total mass of the propylene-based polymer (a1), the decane soluble part is preferably 5 to 30 mass%, more preferably 7 to 25 mass%, and still more preferably 10 to 20 mass%, and the decane insoluble part is preferably 70 to 95 mass%, more preferably 75 to 93 mass%, and still more preferably 80 to 90 mass%.

When the contents of the decane soluble part and the decane insoluble part are within the above ranges, molded articles (for example, automotive interior materials and automotive exterior materials) formed of the composition are excellent in terms of mechanical properties such as stiffness and impact resistance.

In a case where the propylene-based polymer (a1) is mainly a copolymer, the decane soluble part is preferably composed of a propylene/α-olefin copolymer such as a propylene/ethylene random copolymer, and a part of a propylene homopolymer, for example, a by-product that is generated during the polymerization of a low-molecular-weight substance, can be contained.

In a case where the propylene-based polymer (a1) is a copolymer of the above propylene and the different α-olefin, examples of the different α-olefin that is contained in the decane soluble part, the α-olefin of the propylene/α-olefin copolymer in the decane soluble part, include ethylene and/or α-olefins having 4 to 12 carbon atoms, and the like. Specific examples of such a different α-olefin include ethylene, 1-butene, 1-pentene, 1-hexene, 4-methyl-1-pentene, 3-methyl-1-pentene, 1-heptene, 1-octene, 1-nonene, 1-decene, and 1-dodecene. Among these, ethylene is preferable as the different α-olefin.

The decane insoluble part usually consists of a structural unit guided from propylene, but may contain a structural unit guided from a small amount, for example, 10 mol% or less, preferably 5 mol% or less, of a monomer other than propylene in a case where the propylene-based polymer (a1) is the copolymer of propylene and the different α-olefin.

Examples of the monomer other than propylene include α-olefins other than propylene such as ethylene, 1-butene, 1-pentene, 1-hexene, 4-methyl-1-pentene, 3-methyl-1-pentene, 1-heptene, 1-octene, 1-nonene, 1-decene, and 1-dodecene.

Among these, ethylene and α-olefins having 4 to 10 carbon atoms are preferable. These may be copolymerized singly, or two or more thereof may be copolymerized.

The intrinsic viscosity ([η]) of the decane soluble part of the propylene-based polymer (a1) measured in 135°C decalin is preferably 0.1 to 10.0 dl/g, more preferably 1.0 to 9.8 dl/g, still more preferably 1.5 to 9.5 dl/g, and particularly preferably 2.0 to 9.0 dl/g.

When the intrinsic viscosity ([η]) of the decane soluble part is within the above range, automotive interior materials and automotive exterior materials that are formed of the composition are more superior in terms of the balance between stiffness and impact resistance.

In a case where mechanical properties are further required from automotive interior materials and automotive exterior materials that are formed of the composition, the intrinsic viscosity ([η]) of the decane soluble part is preferably 4.0 to 9.0 dl/g, more preferably 4.5 to 8.7 dl/g, and still more preferably 5.0 to 8.4 dl/g.

The MFR (ASTM D1238, 230°C, 2.16 kg load) of the propylene-based polymer (a1) is preferably 1 to 200 g/10 min, more preferably 10 to 100 g/10 min, and still more preferably 20 to 70 g/10 min.

When the propylene-based polymer (a1) having an MFR within the above range is used, the balance between the fluidity and impact resistance of the resulting polypropylene resin composition is more superior.

### [Filler (a2)]

The filler (a2) is not particularly limited, and a variety of conventionally known inorganic fillers (a2-1), natural fibers (a2-2), or the like can be used without limitation as long as the effect of the present invention is not impaired.

The inorganic fillers (a2-1) are not particularly limited as long as the inorganic fillers (a2-1) are fillers composed of an inorganic compound, and, for example, known fillers can be used. Examples of the inorganic fillers (a2-1) include carbon black or carbon black surface-treated with graphite, a silane coupling agent, or the like; oxide-based fillers such as fine silica, silica (including fumed silica, precipitated silica, diatomite, quartz, or the like), alumina, iron oxide, ferrite, magnesium oxide, titanium oxide, antimony trioxide, zirconium oxide, barium oxide, calcium oxide, or the like; hydroxide-based fillers such as aluminum hydroxide, magnesium hydroxide, or the like; silicate-based fillers such as aluminum silicate (clay), magnesium silicate (talc), mica, kaolin, calcium silicate, a glass fiber, a glass flake, a glass bead, or the like; sedimentary rock-based fillers such as diatomite, limestone, or the like; clay mineral-based fillers such as montmorillonite, magnesian montmorillonite, iron montmorillonite, iron magnesian montmorillonite, beidellite, aluminum beidellite, nontronite, aluminum nontronite, saponite, aluminum saponite, hectorite, sauconite, stevensite, bentonite, or the like; magnetic fillers such as ferrite, iron, cobalt, or the like; conductive fillers such as silver, gold, copper, an alloy thereof, or the like; thermally conductive fillers such as aluminum nitride, boron nitride, silicon carbide, or the like; sulfate-based fillers such as aluminum sulfate, magnesium sulfate, barium sulfate, calcium sulfate, or the like; sulfite-based fillers such as calcium sulfite, or the like; carbonate-based fillers such as calcium carbonate, basic magnesium carbonate, dolomite, or the like; titanate-based fillers such as barium titanate, potassium titanate or the like; and the like.

From the viewpoint of the more superior balance between the stiffness and the impact resistance of the resulting polypropylene resin composition, as the inorganic fillers (a2-1), talc, mica, a glass fiber, and calcium carbonate are preferable, and talc is more preferable.

These inorganic fillers (a2-1) may be used singly, or two or more thereof may be used in combination.

The particle diameter of the inorganic filler (a2-1) is preferably 0.01 µm to 100 µm, more preferably 0.1 µm to 80 µm, and still more preferably 1 µm to 50 µm from the viewpoint of making the dispersibility in the propylene-based polymer composition (a) more favorable. The particle diameter (average particle diameter) of the inorganic filler is the 50% particle diameter (d50) that is obtained from a cumulative % distribution curve measured with a laser diffraction-type particle size distribution measuring instrument.

The natural fillers (a2-2) are not particularly limited as long as the natural fillers (a2-2) are natural fillers that can be used as fillers, and, for example, known fillers can be used. Examples of the natural fillers (a2-2) include wood powders (the product obtained by removing the bark from wood and then processing it using a crushing machine), a wood fiber, a bamboo powder, a bamboo fiber, an isolated cellulose fiber, wool, an agricultural fiber, a wood pulp (wood-based pulp made by removing the bark from the trunk of a tree and turning the tree into chips, and performing a mechanical, chemical, or composite treatment thereon), other natural pulps, rayon, cotton, and the like. Examples of the agricultural fiber include wheat straw, rice straw, hemp, flax, kenaf, kapok, jute, ramie, sisal hemp, henequen, a corn fiber, coir, a nut shell, a rice husk, and the like. Examples of the wood pulp include NBKP (needle bleached kraft pulp), LBKP (leaf bleached kraft pulp), and the like. Examples of the other natural pulps include Manila hemp, paper mulberry, mitsumata, gampi, and the like. Among these, a wood powder, a wood fiber, bamboo, a bamboo fiber, cotton, and an isolated cellulose fiber are preferable, and an isolated cellulose fiber is more preferable from the viewpoint of suppressing a variation in the mechanical strengths of molded articles and increasing the predictability of the strengths of the resulting molded articles.

A substance from which the cellulose fiber has been derived is not particularly limited and may be a cellulose fiber that is obtained from any material of wood, grass, pulp, paper and the like. The cellulose fiber that is obtained from wood may be a cellulose fiber that is obtained from any wood raw material of a coniferous tree and a broadleaf tree. The cellulose fiber that is obtained from grass may be a cellulose fiber that is obtained from a non-woody raw material such as Gramineae, Malvaceae, Legumes, Palms, or the like. The cellulose fiber that is obtained from pulp may be a cellulose fiber that is obtained from any pulp such as a cotton linter pulp that is obtained from fibers around a cotton seed. The cellulose fiber that is obtained from paper may be a cellulose fiber that is obtained from any paper of newspapers, cardboard, a magazine, high-quality paper and the like. Among these, a cellulose fiber that is obtained from wood or grass is preferable, and a cellulose fiber that is obtained from wood is more preferable since such a cellulose fiber is easy to procure and inexpensive.

From the viewpoint of enhancing the mechanical strength and impact resistance of the resulting polypropylene resin composition, the average degree of polymerization of the cellulose fiber is preferably 50 or more and 2000 or less, and more preferably 100 or more and 1500 or less. The average degree of polymerization of the cellulose fiber can be measured according to a reduced specific viscosity method using a copper ethylenediamine solution described in the confirmation test (3) of "the manual of the 15^{th} edition of Japanese Pharmacopoeia (published by Hirokawa-Shoten Ltd.)."

As the cellulose fiber, a cellulose fiber that is neither modified nor amorphized may be used, a cellulose fiber that has been modified may be used, or a cellulose fiber that has been amorphized may be used. The modified cellulose fiber can be a cellulose fiber obtained by reacting an ether compound, an alkyl chloride, an alkyl acid anhydride, an alkyl acid chloride or the like with a hydroxyl group of cellulose. The amorphized cellulose fiber can be a cellulose fiber obtained by reducing the degree of crystallization of cellulose by a known method.

The cellulose fiber has a hydroxyl group and a polar functional group, such as a hydroxyl group, a carboxy group, an amino group, or a quaternary ammonium group, introduced by modification.

Examples of a commercially available product of the cellulose fiber include KC FLOCK GK series ("KC FLOCK" is a registered trademark of the same company), which are cellulose fibers manufactured by Nippon Paper Industries Co., Ltd., and the like.

These natural fibers (a2-2) may be used singly, or two or more thereof may be used in combination.

The mass ratio of the propylene-based polymer (a1) to the filler (a2) that are contained in the propylene-based polymer composition (a) (the mass of the propylene-based polymer (a1)/the mass of the filler (a2), hereinafter, also simply referred to as "(a1)/(a2)") is preferably 65/35 to 99/1. In other words, when the total of the propylene-based polymer (a1) and the filler (a2) is set to 100 parts by mass in the propylene-based polymer composition (a) of the present invention, the content of the propylene-based polymer (a1) is 65 to 99 parts by mass, and the content of the filler (a2) is 1 to 35 parts by mass.

From the viewpoint of more suitably exhibiting the effect of the present invention, the content of the propylene-based polymer (a1) in the propylene-based polymer composition (a) is preferably 70 parts by mass or more, more preferably 75 parts by mass or more, still more preferably 80 parts by mass or more, and is preferably 97 parts by mass or less, more preferably 95 parts by mass or less, and still more preferably 93 parts by mass or less. Particularly, when the content of the propylene-based polymer (a1) in the propylene-based polymer composition (a) is within the above range, in the resulting polypropylene resin composition, it is easy to further improve the stiffness, and significant degradation of the impact resistance is less likely to occur.

The content of the filler (a2) in the propylene-based polymer composition (a) is preferably 3 parts by mass or more, more preferably 5 parts by mass or more, still more preferably 7 parts by mass or more, and is preferably 30 parts by mass or less, more preferably 25 parts by mass or less, and still more preferably 20 parts by mass or less.

Herein, in a case where two or more propylene-based polymers (a1) are used, the total amount of the propylene-based polymers (a1) is the "content of the propylene-based polymer (a1)." In addition, in a case where two or more fillers (a2) are used, the total amount of the fillers (a2) is the "content of the filler (a2)."

Aside from the propylene-based polymer (a1) and the filler (a2), the propylene-based polymer composition (a) may contain an additive such as a heat stabilizer, an antistatic agent, a weather stabilizer, a light stabilizer, an anti-aging agent, an antioxidant, a fatty acid metal salt, a softener, a dispersant, a filler, a colorant, a lubricant, or a pigment as necessary as long as the effect of the present invention is not impaired.

The propylene-based polymer composition (a) can be produced by mixing each of the above-described components by a conventionally known method. For example, the propylene-based polymer (a1), the filler (a2), and the additive that is contained as necessary are mixed together with a Henschel mixer, a V-blender, a ribbon blender, a tumbler blender, or the like, and the resulting mixture was melt-kneaded with an extruder, whereby a pellet-like propylene-based polymer composition (a) can be produced.

### <Polyolefin composition (b)>

The polyolefin composition (b) that is used in the present invention contains a polyolefin (b1), an aliphatic polyamide resin (b2), and a modified elastomer (b3).

### [Polyolefin (b1)]

The polyolefin (b1) is a homopolymer of an α-olefin (including ethylene) such as ethylene, propylene, 1-butene, or 4-methyl-1-pentene, a copolymer of the α-olefin and a different α-olefin or a copolymer of the α-olefin and a monomer other than α-olefins, in which the α-olefin is mainly contained. Specific examples of the polyolefin (b1) include the following ethylenic polymers, propylene-based polymers, and 1-butene-based polymers.

### <Ethylenic polymers>

Examples of the ethylenic polymers include ethylene homopolymers and copolymers of ethylene and an α-olefin having 3 to 20 carbon atoms, in which, usually, a structural unit derived from ethylene that is referred to as a high density polyethylene (HDPE), a medium density polyethylene (MDPE), a low density polyethylene (LDPE), a linear low density polyethylene (LLDPE), or an ethylene/α-olefin copolymer is mainly contained (typically, more than 50 mol% of the structural unit derived from ethylene is contained). Specific examples of the α-olefin having 3 to 20 carbon atoms that is copolymerized with ethylene include α-olefins having 4 to 20 carbon atoms such as propylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, 2-methyl-1-butene, 3-methyl-1-butene, 3,3-dimethyl-1-butene, 3-methyl-1-pentene, and 3-methyl-1-hexene. Among these, α-olefins having 3 to 10 carbon atoms are preferable, α-olefins having 3 to 8 carbon atoms are more preferable, and particularly, ethylene, 1-butene, 1-hexene, 4-methyl-1-pentene, and 1-octene are still more preferable. The mole ratio of ethylene to the α-olefin (ethylene/α-olefin) is preferably 99/1 to 60/40, more preferably 95/5 to 70/30, and still more preferably 90/10 to 60/25.

Suitable specific examples of the ethylene/α-olefin copolymer include ethylene/propylene copolymers, ethylene/1-butene copolymers, ethylene/1-hexene copolymers, ethylene/4-methyl-1-pentene copolymers, ethylene/1-octene copolymers, and ethylene/propylene/1-butene copolymers.

### <Propylene-based polymers>

The propylene-based polymers are polymers mainly containing a structural unit derived from propylene (typically containing more than 50 mol% of the structural unit derived from propylene) such as propylene homopolymers (homo PP), copolymers of propylene and ethylene and/or an α-olefin having 4 to 20 carbon atoms (random copolymers: random PP), and compositions of a propylene homopolymer and an ethylene/propylene copolymer (block copolymers: block PP), and specific examples of the α-olefin in the propylene/α-olefin copolymer include ethylene and α-olefins having 4 to 20 carbon atoms such as ethylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, 2-methyl-1-butene, 3-methyl-1-butene, 3,3-dimethyl-1-butene, 3-methyl-1-pentene, and 3-methyl-1-hexene. Among these, ethylene and α-olefins having 4 to 10 carbon atoms are preferable, ethylene and α-olefins having 4 to 8 carbon atoms are more preferable, and particularly, ethylene, 1-butene, 1-hexene, 4-methyl-1-pentene, and 1-octene are still more preferable. The mole ratio of propylene to the α-olefin (propylene/α-olefin) is preferably 99/1 to 60/40, more preferably 95/5 to 70/30, and still more preferably 90/10 to 60/25.

Suitable specific examples of the propylene/α-olefin copolymer (random PP) include propylene/ethylene copolymers, propylene/1-butene copolymers, propylene/1-hexene copolymers, propylene/4-methyl-1-pentene copolymers, propylene/1-octene copolymers, and propylene/ethylene/1-butene copolymers. Among these, the propylene/ethylene copolymers are particularly preferable.

In a case where the propylene-based polymer is a propylene/ethylene block copolymer (block PP), the amount of the decane soluble part at room temperature (23°C) of the propylene/ethylene block copolymer is preferably 8 mass% or more and 35 mass% or less, and more preferably 8 mass% or more and 28 mass% or less. In addition, the intrinsic viscosity [η] of the decane soluble part at room temperature (23°C) measured in 135°C decalin is preferably 1.0 dl/g or more and 10.0 dl/g or less. In addition, the amount of ethylene (the content of a structural unit derived from ethylene) of the decane soluble part at the room temperature (23°C) is preferably 33 mol% or more and 48 mol% or less and more preferably 37 mol% or more and 43 mol% or less.

In a case where the propylene-based polymer is a propylene homopolymer, the melting point is preferably 155°C to 170°C and more preferably 158°C to 165°C.

In a case where the propylene-based polymer is a propylene/ethylene random copolymer, the amount of ethylene in the propylene/ethylene random copolymer is preferably 1.9 to 5.4 mass% and more preferably 2.0 to 4.8 mass%. In addition, the crystal melting point of the propylene/ethylene rando copolymer that is measured with a differential scanning calorimeter (DSC) according to JIS K 7121 is preferably, usually, 130°C to 150°C, more preferably 130°C to 145°C, and particularly preferably 135°C to 145°C.

The propylene/ethylene block copolymer and the propylene/ethylene random copolymer may be used singly, and two or more copolymers may be mixed and used. For example, it is also possible to mix two or more copolymers for MFR adjustment.

### <1-Butene-based polymers>

The 1-butene-based polymers are polymers mainly including a structural unit derived from 1-butene (typically, containing more than 50 mol% of the structural unit derived from 1-butene) such as 1-butene homopolymers (polybutene) and copolymers of 1-butene, ethylene or propylene, and an α-olefin having 5 to 20 carbon atoms (1-butene/α-olefin copolymers).

Among these polyolefins (b1), propylene-based polymers are preferable, and propylene homopolymers are more preferable from the viewpoint of the more superior balance between the stiffness and impact resistance of the resulting polypropylene resin composition.

One polyolefin (b1) may be used singly, or two or more copolymers may be mixed and used.

The MFR (ASTM D1238, 230°C, 2.16 kg load) of the polyolefin (b1) is preferably 1 to 200 g/10 min, more preferably 5 to 100 g/10 min, and still more preferably 10 to 70 g/10 min.

When the polyolefin (b1) having an MFR within the above range is used, it becomes easy to form a phase structure of the polyolefin composition (b) to be described below, and it is possible to make the balance between the stiffness and impact resistance of the resulting polypropylene resin composition more superior.

As a monomer that is a raw material of the polyolefin (b1), for example, a fossil fuel-derived monomer may be used, a biomass-derived monomer may be used, and a fossil fuel-derived monomer and a biomass-derived monomer may be used. One kind of these monomers may be used singly, or two or more kinds thereof may be used.

### [Aliphatic polyamide resin (b2)]

The aliphatic polyamide resin (b2) is not particularly limited, and a variety of conventionally known aliphatic polyamide resins can be used without limitation as long as the effect of the present invention is not impaired. For example, amino acid lactam, or a melt-moldable aliphatic polyamide resin obtained by a polycondensation reaction of diamine and dicarboxylic acid can be used. Specific examples of the aliphatic polyamide resin (b2) include the following resins.
(1) Polycondensates of an organic dicarboxylic acid having 4 to 12 carbon atoms and an organic diamine having 2 to 13 carbon atoms, for example, polyhexamethylene adipamide [Polyamide 66] that is a polycondensate of hexamethylenediamine and adipic acid, polyhexamethylene azelamide [Polyamide 69] that is a polycondensate of hexamethylenediamine and azelaic acid, polyhexamethylene sebacamide [Polyamide 610] that is a polycondensate of hexamethylenediamine and sebacic acid, polyhexamethylene dodecanoamide [Polyamide 612] that is a polycondensate of hexamethylenediamine and dodecanedioic acid, and a polycondensate [Polyamide 1010] of a diamine having 10 carbon atoms (1,10-decanediamine (decamethylenediamine) for which castor oil is used as a raw material) and dicarboxylic acid (sebacic acid) having 10 carbon atoms.
   Examples of the organic dicarboxylic acid include adipic acid, pimelic acid, suberic acid, sebacic acid, dodecanedioic acid, and the like. Examples of the organic diamine include hexamethylenediamine, octamethylenediamine, nonanediamine, octanediamine, decanediamine, undecanediamine, dodecanediamine, and the like.
(2) Polycondensates of ω-amino acids, for example, polyundecaneamide [Polyamide 11] that is a polycondensate of ω-aminoundecanoic acid.
(3) Ring-opened polymers of lactams, for example, polycapramide [Polyamide 6] that is a ring-opened polymer of ε-caprolactam, and polylaurinlactam [Polyamide 12] that is a ring-opened polymer of ε-aminolaurolactam.

Among the aliphatic polyamide resins (b2), Polyamide 6, Polyamide 11, Polyamide 12, Polyamide 612, Polyamide 610, and Polyamide 1010 are preferable from the viewpoint of the more superior balance between the stiffness and impact resistance of the resulting polypropylene resin composition.

The aliphatic polyamide resin (b2) may be used singly, or two or more thereof may be used in combination. As a raw material of the aliphatic polyamide resin (b2), any of a fossil fuel-derived raw material or a biomass-derived raw material can be used. In addition, a fossil fuel-derived raw material and a biomass-derived raw material may be jointly used.

The melt volume rate (MVR) of the aliphatic polyamide resin (b2) measured at 275°C and at a load of 2.16 kg is preferably 50 to 300 cm³/10 min, more preferably 100 to 250 cm³/10 min, and particularly preferably 125 to 200 cm³/10 min. When such an aliphatic polyamide resin is used, there is a tendency that the impact resistance that the polyamide resin intrinsically has develops sufficiently, and there are no cases where the impact resistance is significantly impaired even when the aliphatic polyamide resin is mixed and used with the modified elastomer (b3).

### [Modified elastomer (b3)]

The modified elastomer (b3) is an elastomer in which a portion containing a group having reactivity against the aliphatic polyamide resin (b2) is added to a non-modified elastomer (b3').

The non-modified elastomer (b3') that acts as a raw material of the modified elastomer (b3) is an olefin-based thermoplastic elastomer (b3'-1) having a structural unit derived from ethylene and a structural unit derived from an α-olefin having 3 to 8 carbon atoms, or a styrene-based thermoplastic elastomer (b3'-2) having a structural unit derived from a styrene-based compound.

The olefin-based thermoplastic elastomer (b3'-1) is an elastomer having a structural unit derived from ethylene and a structural unit derived from an α-olefin having 3 to 8 carbon atoms, and is an elastomer containing the structural unit derived from ethylene in an amount of preferably 75 to 95 mol%, more preferably 75 to 90 mol%, and containing the structural unit derived from an α-olefin having 3 to 8 carbon atoms in an amount of preferably 5 to 25 mol%, more preferably 10 to 25 mol%.

Examples of the α-olefin having 3 to 8 carbon atoms include propylene, 1-butene, 1-pentene, 1-hexene, 1-heptene, and 1-octene. Among these α-olefins having 3 to 8 carbon atoms, 1-butene, 1-hexene, and 1-octene are preferable.

The α-olefin having 3 to 8 carbon atoms may be used singly, or two or more thereof may be used in combination.

The ethylene and the α-olefin having 3 to 8 carbon atoms, which are monomers that constitute the olefin-based thermoplastic elastomer (b3'-1) may be, for example, fossil fuel-derived monomers and/or biomass-derived monomers, and these monomers may be used singly or two or more thereof may be jointly used.

The content of the structural unit derived from the α-olefin having 3 to 8 carbon atoms in the olefin-based thermoplastic elastomer (b3'-1) is preferably 5 to 25 mol%, more preferably 10 to 25 mol%, still more preferably 11 to 22 mol%, and particularly preferably 12 to 20 mol%. When the content of the structural unit derived from the α-olefin having 3 to 8 carbon atoms is within the above range, a modified elastomer having favorable flexibility and easy handleability can be obtained. In addition, a polypropylene resin composition having excellent impact resistance can be obtained.

The melt flow rate (MFR) of the olefin-based thermoplastic elastomer (b3'-1) that is measured at 230°C and at a load of 2.16 kg is preferably 0.1 to 30 g/10 min, more preferably 0.3 to 20 g/10 min, and still more preferably 0.5 to 10 (g/10 min). When the melt flow rate is within the above range, the miscibility between the modified elastomer (b3) in which a reactive group is added to the olefin-based thermoplastic elastomer (b3'-1) and the aliphatic polyamide resin (b2) becomes favorable, and a polypropylene resin composition having excellent impact resistance can be obtained.

The olefin-based thermoplastic elastomer (b3'-1) can be prepared by randomly copolymerizing ethylene and the α-olefin having 3 to 8 carbon atoms in the presence of, for example, a vanadium-based catalyst composed of a soluble vanadium compound and an alkyl aluminum halide compound or a zirconium-based catalyst composed of a metallocene compound of zirconium and an organic aluminum oxy compound.

Examples of the styrene-based thermoplastic elastomer (b3'-2) include block copolymers of a styrene-based compound and a conjugated diene compound and hydrogenated products thereof.

Examples of the styrene-based compound include styrene, alkylstyrenes such as α-methylstyrene, p-methylstyrene, and p-t-butylstyrene, p-methoxystyrene, and vinylnaphthalene.

These styrene-based compounds may be used singly, or two or more thereof may be used in combination.

Examples of the conjugated diene compound include butadiene, isoprene, piperylene, methylpentadiene, phenylbutadiene, 3,4-dimethyl-1,3-hexadiene, and 4,5-diethyl-1,3-octadiene.

These conjugated diene compounds may be used singly, or two or more thereof may be used in combination.

Specific examples of the styrene-based thermoplastic elastomer (b3'-2) include styrene-butadiene-styrene copolymers (SBS), styrene-isoprene-styrene copolymers (SIS), styrene-ethylene/butylene-styrene copolymers (SEBS), styrene-ethylene/propylene-styrene copolymers (SEPS), and the like. Among these styrene-based thermoplastic elastomers (b3'-2), SEBS is preferable.

These styrene-based thermoplastic elastomers (b3'-2) may be used singly, or two or more thereof may be used in combination.

Examples of the group having reactivity against the aliphatic polyamide resin (b2) (a group having reactivity against the aliphatic polyamide resin (b2) that is contained in the modified elastomer (b3), hereinafter, also simply referred to as "reactive group") include an acid anhydride group (-CO-O-OC-), a carboxyl group (-COOH), an epoxy group {-C-O-C- (three-membered ring structure composed of two carbon atoms and one oxygen atom)}, an oxazoline group (-C₃H₄NO), an isocyanate group (-NCO), and the like.

Among these modified elastomers (b3), only one of these reactive groups may be contained, or two or more thereof may be contained.

The amount of graft modification (the content of a portion derived from a monomer containing the reactive group) of the modified elastomer (b3) is not particularly limited as long as the effect of the present invention is exhibited, but is preferably 0.1 to 5 mass%, more preferably 0.5 to 2 mass%, and still more preferably 0.8 to 1.4 mass% per mass of the modified elastomer (b3).

A method for adding the portion containing the reactive group to the non-modified elastomer (b3') is not particularly limited, and examples thereof include a method in which a chemical reaction is performed on a specific group that is contained in the non-modified elastomer (b3') to add the reactive group (for example, in a case where a carbon-carbon double bond is present in the non-modified elastomer (b3'), an epoxy group is introduced by oxidizing this carbon-carbon double bond), a method in which a monomer containing the reactive group is added to the non-modified elastomer (b3') by graft modification, and the like.

Examples of the monomer containing the reactive group that is used in the graft modification include monomers having a polymerizable unsaturated bond and an acid anhydride group, monomers having a polymerizable unsaturated bond and a carboxyl group, monomers having a polymerizable unsaturated bond and an epoxy group, and the like.

Specific examples thereof include acid anhydrides such as maleic anhydride, itaconic anhydride, succinic anhydride, glutaric anhydride, adipic anhydride, citraconic anhydride, tetrahydrophthalic anhydride, and butenylsuccinic anhydride; carboxylic acids such as maleic acid, itaconic acid, fumaric acid, acrylic acid, and methacrylic acid; and the like.

Among these monomers containing the reactive group, acid anhydrides are preferable, maleic anhydride and itaconic anhydride are more preferable, and maleic anhydride is still more preferable.

These monomers containing the reactive group may be used singly, or two or more thereof may be used in combination.

The monomer containing the reactive group that is used in the graft modification (for example, maleic acid and anhydrides thereof) may be fossil fuel-derived monomers or may be biomass-derived monomers, and a fossil fuel-derived monomer and a biomass-derived monomer may be used in combination.

In the case of fabricating the modified elastomer (b3) by adding the monomer containing the reactive group to the non-modified elastomer (b3') by graft modification, the amount of graft modification of the modified elastomer (b3) is preferably 0.1 to 5 mass%, more preferably 0.5 to 2 mass%, and still more preferably 0.8 to 1.4 mass%. When the amount of modification is too small, there are cases where the impact resistance of the resulting polypropylene resin composition deteriorates. When the amount of modification is too large, there are cases where a foreign matter such as gel is incorporated into the modified elastomer (b3).

In the case of producing the modified elastomer (b3) by graft modification, the modified elastomer (b3) can be produced by, for example, graft-modifying the carboxylic acid (for example, maleic acid) or acid anhydride (for example, maleic anhydride) to the non-modified elastomer (b3') in the presence of a radical initiator.

The amount of the carboxylic acid or acid anhydrides charged is usually 0.010 to 15 parts by mass and preferably 0.010 to 5.0 parts by mass relative to 100 parts by mass of the non-modified elastomer (b3').

The amount of the radical initiator used is usually 0.0010 to 1.0 part by mass, preferably 0.0010 to 0.30 parts by mass per 100 parts by mass of the non-modified elastomer (b3').

As the radical initiator, for example, an organic peroxide, an azo compound, a metal hydroxide and the like can be used. The radical initiator can be used even after being directly mixed with the carboxylic acid or the acid anhydride, the non-modified elastomer (b3') or the like and may also be used after being dissolved in a small amount of an organic solvent. As this organic solvent, an organic solvent capable of dissolving the radical initiator can be used.

The graft modification by the carboxylic acid or the acid anhydride can be performed by a conventionally known method. For example, the non-modified elastomer (b3') is dissolved in the organic solvent, next, the carboxylic acid or the acid anhydride, the radical initiator, and the like are added to the solution, and the components are reacted with each other at a temperature of 70°C to 200°C, preferably at 80°C to 190°C for 0.5 to 15 hours, preferably for one to 10 hours, whereby the modified elastomer (b3) can be fabricated by graft modification.

In addition, the modified elastomer (b3) can be produced by reacting the carboxylic acid or the acid anhydride and the non-modified elastomer (b3') in the presence of the radical initiator with no solvents using an extruder or the like. This reaction is desirably performed at a temperature at which the non-modified elastomer (b3') falls into a molten state or higher for 0.5 to 10 minutes.

The melt flow rate (MFR) of the modified elastomer (b3) that is measured at 230°C and at a load of 2.16 kg is 0.1 to 50 g/10 min and preferably 0.5 to 10 g/10 min. When the MFR is controlled to be within this range, the impact resistance of the resulting polypropylene resin composition is excellent.

### [Phase structure of polyolefin composition (b)]

The polyolefin composition (b) has a continuous phase (α) containing the polyolefin (b1), and a dispersed phase (β) containing the aliphatic polyamide resin (b2) and the modified elastomer (b3) and dispersed in the continuous phase (α), and the dispersed phase (β) is composed of a melt-kneaded product of the aliphatic polyamide resin (b2) and the modified elastomer (b3).

When the polyolefin composition (b) having such a phase structure is contained in the polypropylene resin composition, the polypropylene resin composition having more superior balance between stiffness and impact resistance can be obtained.

The dispersed phase (β) preferably has a continuous phase (β1) containing the aliphatic polyamide resin (b2) and a fine dispersed phase (β2) containing the modified elastomer (b3) and dispersed in the continuous phase (β1). When the dispersed phase (β) has such a phase structure, a polypropylene resin composition having more superior impact resistance can be obtained.

In addition, in the polyolefin composition (b), in a case where a propylene/ethylene block copolymer having a dispersed phase of an ethylene block is used as the propylene-based polymer (a1) that is contained in the propylene-based polymer composition (a), it is possible to agglomerate at least a part of the ethylene block in the interface between the continuous phase (α) and the dispersed phase (β). When the polyolefin composition (b) has such a phase structure, there is a tendency that the impact resistance of the resulting polypropylene resin composition is superior.

The size of the dispersed phase (β) in the continuous phase (α) of the polyolefin composition (b) is not particularly limited as long as the effect of the present invention is exhibited, and the average diameter (average particle diameter) is preferably 10000 nm or less, more preferably 50 nm or more and 8000 nm or less, and still more preferably 100 nm or more and 4000 nm or less. The average diameter of this dispersed phase (β) is an average value (nm) of the maximum lengths of 50 dispersed phases (β) freely selected from an image that is obtained upon electron microscopic observation.

In a case where the dispersed phase (β) of the polyolefin composition (b) has the continuous phase (β1) and the fine dispersed phase (β2) dispersed in the continuous phase (β1), the size of the fine dispersed phase (β2) is not particularly limited as long as the effect of the present invention is exhibited, and the average diameter (average particle diameter) is preferably 5 nm or more and 1000 nm or less, more preferably 5 nm or more and 600 nm or less, still more preferably 10 nm or more and 400 nm or less, and particularly preferably 15 nm or more and 350 nm or less. The average diameter of this fine dispersed phase (β2) is an average value (nm) of the maximum lengths of 100 fine dispersed phase (β2) freely selected from an image that is obtained using an electron microscope.

In the polyolefin composition (b), based on the sum of the continuous phase (α) and the dispersed phase (β) of 100 mass%, the dispersed phase (β) is preferably 80 mass% or less. That is, usually, in a case where the polyolefin (b1) is denoted as W_{b1}, and the total amount of the aliphatic polyamide resin (b2) and the modified elastomer (b3) is denoted as W_{b2+b3}, and when the sum of W_{b1} and W_{b2+b3} is set to 100 mass%, the proportion of W_{b2+b3} is preferably 80 mass% or less (usually, 0.5 mass% or more). When the ratio of the amounts is set within the above range, it is possible to make all of the impact resistance, stiffness, and moldability of the resulting polypropylene resin composition more superior. From this viewpoint, the proportion is preferably 5 mass% or more and 78 mass% or less, more preferably 10 mass% or more and 77 mass% or less, still more preferably 23 mass% or more and 76 mass% or less, far still more preferably 30 mass% or more and 75 mass% or less, particularly preferably 33 mass% or more and 72 mass% or less, more particularly preferably 35 mass% or more and 67 mass% or less, and especially preferably 37 mass% or more and 63 mass% or less.

Based on the sum of the aliphatic polyamide resin (b2) and the modified elastomer (b3) of 100 mass%, the content proportion of the aliphatic polyamide resin (b2) is preferably 10 mass% or more and 80 mass% or less. When the content proportion of the aliphatic polyamide resin (b2) is set within this range, it is possible to facilitate the formation of a phase structure in which the polyolefin (b1) forms the continuous phase (α) and a phase containing the aliphatic polyamide resin (b2) forms the dispersed phase (β). This makes it possible to facilitate a polypropylene resin composition having excellent impact resistance and also having excellent stiffness to be obtained. From this viewpoint, the content proportion of the aliphatic polyamide resin (b2) is preferably 12 mass% or more and 78 mass% or less, more preferably 14 mass% or more and 75 mass% or less, still more preferably 25 mass% or more and 73 mass% or less, far still more preferably 30 mass% or more and 71 mass% or less, particularly preferably 34 mass% or more and 68 mass% or less, and more particularly preferably 40 mass% or more and 64 mass% or less. When the content proportion of the aliphatic polyamide resin (b2) is set within the above range, it is possible to disperse the dispersed phase (β) that is obtained from the aliphatic polyamide resin (b2) and the modified elastomer (b3) to be smaller. Furthermore, it is possible to reduce the amount of the aliphatic polyamide resin (b2) having a large specific gravity and to decrease the specific gravity of the polypropylene resin composition. This makes it possible to obtain a polypropylene resin composition having a light weight and having excellent impact resistance and stiffness.

The polyolefin composition (b) that is used in the present invention can be produced, for example, as follows. First, the aliphatic polyamide resin (b2) and the modified elastomer (b3) are melt-kneaded so that the content proportions become, for example, as described above to fabricate a melt-kneaded product thereof. The resulting melt-kneaded product of the aliphatic polyamide resin (b2) and the modified elastomer (b3) and the polyolefin (b1) are melt-kneaded so that the content proportions become, for example, as described above to fabricate the polyolefin composition (b).

A melt kneading method is not particularly limited, and examples thereof include methods in which the respective components are melt-kneaded using a kneading device such as an extruder (a single screw extruder, a twin screw extruder, or the like), a kneader, or a mixer (a high-speed flow mixer, a paddle mixer, a ribbon mixer, or the like). These devices may be used singly, or two or more thereof may be used in combination. In addition, in the case of fabricating the polyolefin composition (b) by melt kneading, the polyolefin composition (b) may be fabricated by melt-kneading the aliphatic polyamide resin (b2) and the modified elastomer (b3) to fabricate a melt-kneaded product and then continuously kneading this melt-kneaded product and the polyolefin (b1) or the polyolefin composition (b) may be fabricated by melt-kneading the aliphatic polyamide resin (b2) and the modified elastomer (b3) to fabricate a melt-kneaded product, fabricating, for example, pellets of this melt-kneaded product once, and then melt-kneading the pellets of this melt-kneaded product and the polyolefin (b1). In addition, during the melt kneading, the respective components may be injected in a lump and melt-kneaded or the respective components may be injected in installments and melt-kneaded.

The temperature during the melt kneading can be set as appropriate depending on the kind or the like of a resin being used, the respective components are desirably kneaded in a molten state, and the temperature is usually 190°C to 350°C, preferably 200°C to 330°C, and more preferably 205°C to 310°C.

### <Acid-modified polypropylene (c)>

The acid-modified polypropylene (c) is an acid-modified product of non-modified polypropylene. The acid-modified polypropylene (c) can be obtained by acid-modifying a non-modified polypropylene with a compound selected from an unsaturated carboxylic acid and derivatives thereof and preferably can be obtained by modifying a non-modified polypropylene with maleic acid or an anhydride thereof. The acid-modified polypropylene (c) may be prepared using one non-modified polypropylene or may be prepared using a combination of two or more non-modified polypropylenes. As a monomer that is a raw material of the acid-modified polypropylene (c), for example, a fossil fuel-derived monomer may be used, a biomass-derived monomer may be used, and a fossil fuel-derived monomer and a biomass-derived monomer may be used. These monomers may be used singly, or two or more thereof may be used.

The acid-modified polypropylene (c) can be produced by graft-modifying a non-modified polypropylene with a compound selected from an unsaturated carboxylic acid and derivatives thereof, for example. In the case of producing the acid-modified polypropylene (c) by graft modification, the acid-modified polypropylene (c) can be produced by graft-modifying an unsaturated carboxylic acid (for example, maleic acid) or an unsaturated carboxylic acid derive (for example, acid anhydride such as maleic anhydride) to a non-modified polypropylene in the presence of a radical initiator. The conditions of the graft modification are the same as those in the case of producing the modified elastomer (b3) by graft modification.

Examples of the radical initiator that can be used at the time of producing the acid-modified polypropylene (c) by graft modification include 1,1-di(t-butylperoxy)cyclohexane, 2,2-di(4,4-di-(t-butylperoxy)cyclohexyl)propane, t-hexylperoxyisopropyl monocarbonate, t-butylperoxymaleic acid, t-butylperoxy-3,5,5-trimethylhexanoate, t-butylperoxylaurate, t-butylperoxyisopropyl monocarbonate, t-butylperoxy-2-ethylhexyl monocarbonate, t-hexylperoxybenzoate, 2,5-dimethyl-2,5-di(benzoylperoxy)hexane, t-butylperoxyacetate, 2,2-di(t-butylperoxy)butane, t-butylperoxybenzoate, n-butyl-4,4-di(t-butylperoxy)valerate, di(2-t-butylperoxyisopropyl)benzene, dicumyl peroxide, di-t-hexyl peroxide, 2,5-dimethyl-2,5-di(t-butylperoxy)hexane, t-butylcumyl peroxide, di-t-butyl peroxide, and 2,5-dimethyl-2,5-di(tert-butylperoxy)hexane. Among these, 2,5-dimethyl-2,5-di(tert-butylperoxy)hexane is preferable.

The acid-modified polypropylene (c) preferably satisfies at least one requirement of the following requirements (c-i) and (c-ii) and more preferably satisfies both of the following requirements (c-i) and (c-ii).

### Requirement (c-i)

The melt flow rate (MFR) of the acid-modified polypropylene (c) at 230°C and at a load of 2.16 kg is within a range of 100 to 300 g/10 min. The melt flow rate of the acid-modified polypropylene (c) can be measured under conditions of 230°C and at a load of 2.16 kg according to ASTM D 1238. The melt flow rate of the acid-modified polypropylene (c) is within a range of preferably 120 to 280 g/10 min, more preferably 140 to 260 g/10 min, and still more preferably 160 to 240 g/10 min. When the melt flow rate of the acid-modified polypropylene (c) is within the above range, there is a tendency that the strength of the resulting polypropylene resin composition is more superior.

### Requirement (c-ii)

The density is within a range of 895 to 920 kg/m³. The density of the acid-modified polypropylene (c) can be measured according to ASTM D 1505.

The density of the acid-modified polypropylene (c) is within a range of preferably 896 to 915 kg/m³ and more preferably 897 to 910 kg/m³.

When the density of the acid-modified polypropylene (c) is within the above range, the handleability of pallets of the acid-modified polypropylene (c) is excellent, and there is a tendency that it is possible to further suppress the deterioration of the stiffness of the resulting polypropylene resin composition.

The polypropylene resin composition of the present invention may further contain the following ethylene-based copolymer (d).

### <Ethylene-based copolymer (d)>

The ethylene-based copolymer (d) is a copolymer consisting of ethylene and an α-olefin having 3 to 20 carbon atoms and preferably a copolymer of ethylene and an α-olefin having 3 to 10 carbon atoms. That is, the ethylene-based copolymer (d) according to the present invention is a copolymer composed of a structural unit derived from ethylene and a structural unit derived from the α-olefin having 3 to 20 carbon atoms.

Examples of the α-olefin having 3 to 20 carbon atoms, which is a copolymerization component, include propylene, 1-butene, 1-pentene, 3-methyl-1-butene, 4-methyl-1-pentene, 1-hexene, 1-octene, 1-decene, 1-dodecene, 1-tetradecene, and the like. The α-olefin having 3 to 20 carbon atoms is preferably an α-olefin having 3 to 10 carbon atoms. The α-olefin having 3 to 20 carbon atoms, which is a copolymerization component, may be used singly or two or more thereof may be used in combination.

The ethylene and the α-olefin having 3 to 20 carbon atoms, which are monomers that constitute the ethylene-based copolymer (d) may be, for example, fossil fuel-derived monomers and/or biomass-derived monomers, and one kind of these monomers may be used singly or two or more kinds thereof may be jointly used.

As the ethylene-based copolymer (d), among these, particularly, an ethylene/1-butene copolymer is preferable.

The kind of the α-olefin that constitutes the ethylene-based copolymer (d) is clear from the kind of the copolymerization monomer at the time of producing the ethylene-based copolymer (d), and the kind of the α-olefin in the ethylene-based copolymer can be identified by measuring the ¹³C-NMR spectrum of a sample obtained by uniformly dissolving about 200 mg of the ethylene-based copolymer in 1 ml of hexachlorobutadiene in a 10 mmφ sample tube under measurement conditions of a temperature of 120°C, a frequency of 25.05 MHz, a spectrum width of 1500 Hz, a pulse repetition time of 4.2 sec, and a 45° pulse width of 6 µsec.

The content of the structural unit derived from ethylene (ethylene content) of the ethylene-based copolymer (d) is not particularly limited, but is within a range of usually 50 to 99 mol%, preferably 60 to 98 mol%, and more preferably 75 to 97 mol% in all of the structural units of the ethylene-based copolymer (d). In addition, the content of the structural unit derived from the α-olefin having 3 to 20 carbon atoms (α-olefin content) of the ethylene-based copolymer (d) is within a range of usually 1 to 50 mol%, preferably 2 to 40 mol%, and more preferably 3 to 25 mol% in all of the structural units of the ethylene-based copolymer (d).

The ethylene-based copolymer (d) preferably satisfies at least one requirement of the following requirements (d-i) and (d-ii) and more preferably satisfies both of the following requirements (d-i) and (d-ii).

### (d-i) Melt flow rate

The melt flow rate (MFR) of the ethylene-based copolymer (d) measured at 190°C and at a load of 2.16 kg is 0.1 to 50 g/10 min. The melt flow rate (MFR) of the ethylene-based copolymer (d) can be measured under conditions of 190°C and at a load of 2.16 kg according to ASTM D 1238. The melt flow rate of the ethylene-based copolymer (d) is preferably 0.2 to 25 g/10 min and more preferably 0.3 to 10 g/10 min. When the melt flow rate of the ethylene-based copolymer (d) is within the above range, the strength of the resulting polypropylene resin composition is likely to increase, there is a tendency that the dispersibility in the polypropylene resin composition is favorable, and the impact resistance of the resulting polypropylene resin composition is more superior.

### (d-ii) Density

The density of the ethylene-based copolymer (d) is 850 to 890 kg/m³. The density of the ethylene-based copolymer (d) can be measured according to ASTM D 1505. The density of the ethylene-based copolymer (d) is preferably 853 to 880 kg/m³ and more preferably 855 to 870 kg/m³. When the density of the ethylene-based copolymer (d) is within the above range, not only the handleability of the pellets of the ethylene-based copolymer (d) but also the impact resistance of the polypropylene resin composition at normal temperature and at low temperatures are more superior.

In a case where the ethylene-based copolymer (d) is contained in the polypropylene resin composition of the present invention, based on the total content of the propylene-based polymer composition (a), the polyolefin composition (b), the modified polypropylene (c), and the ethylene-based copolymer (d) of 100 parts by mass, it is preferable that the content of the propylene-based polymer composition (a) is 50 to 89.9 parts by mass, the content of the polyolefin composition (b) is 5 to 44.9 parts by mass, the content of the modified polypropylene (c) is 0.1 to 15 parts by mass, and the content of the ethylene-based copolymer (d) is 5 to 30 parts by mass, it is more preferable that the content of the propylene-based polymer composition (a) is 55 to 85.5 parts by mass, the content of the polyolefin composition (b) is 8 to 30 parts by mass, the content of the modified polypropylene (c) is 1 to 12 parts by mass, and the content of the ethylene-based copolymer (d) is 5 to 25 parts by mass, and it is still more preferable that the content of the propylene-based polymer composition (a) is 60 to 80 parts by mass, the content of the polyolefin composition (b) is 10 to 25 parts by mass, the content of the modified polypropylene (c) is 2.5 to 11 parts by mass, and the content of the ethylene-based copolymer (d) is 8 to 20 parts by mass. When the respective components are contained in such blending proportions, there is a tendency that the balance between the stiffness and heat resistance of the resulting polypropylene resin composition is more superior.

In addition, in a case where the ethylene-based copolymer (d) is contained in the polypropylene resin composition of the present invention, based on the total content of the propylene-based polymer composition (a), the polyolefin composition (b), the modified polypropylene (c), and the ethylene-based copolymer (d) of 100 parts by mass, it is preferable that the content of the propylene-based polymer composition (a) is 50 to 89.9 parts by mass, the content of the polyolefin composition (b) is 5 to 44.9 parts by mass, the content of the modified polypropylene (c) is 0.1 to 5 parts by mass, and the content of the ethylene-based copolymer (d) is 5 to 30 parts by mass, it is more preferable that the content of the propylene-based polymer composition (a) is 55 to 85 parts by mass, the content of the polyolefin composition (b) is 8 to 30 parts by mass, the content of the modified polypropylene (c) is 0.5 to 4 parts by mass, and the content of the ethylene-based copolymer (d) is 5 to 25 parts by mass, and it is still more preferable that the content of the propylene-based polymer composition (a) is 60 to 80 parts by mass, the content of the polyolefin composition (b) is 10 to 25 parts by mass, the content of the modified polypropylene (c) is 1 to 3 parts by mass, and the content of the ethylene-based copolymer (d) is 8 to 20 parts by mass. When the respective components are contained in such blending proportions, there is a tendency that the balance between the stiffness and impact resistance of the resulting polypropylene resin composition is more superior.

Aside from the propylene-based polymer composition (a), the polyolefin composition (b), and the acid-modified polypropylene (c), the polypropylene resin composition of the present invention may contain a different polymer such as the ethylene-based copolymer (d) as long as the effect of the present invention is not impaired. One kind of different polymer may be used singly, or two or more kinds thereof may be used in combination.

In addition, the polypropylene resin composition of the present invention may contain an additive as long as the effect of the present invention is not impaired. Examples of the additive include a flame retardant, a flame retardant aid, a filler, a colorant, an antibacterial agent, an antistatic agent, and the like. These additives may be used singly, or two or more thereof may be used in combination.

In the polypropylene resin composition of the present invention, the propylene-based polymer (a1) that is contained in the propylene-based polymer composition (a), the polyolefin (b1) that is contained in the polyolefin composition (b), and the acid-modified polypropylene (c) are integrated to form a continuous phase (α').

In addition, usually, the filler (a2) and the dispersed phase (β) formed of the polyolefin composition (b) are dispersed in this continuous phase (α').

Furthermore, in the polyolefin composition (b), in a case where the dispersed phase (β) has the continuous phase (β1) containing the aliphatic polyamide resin (b2) and the fine dispersed phase (β2) containing the modified elastomer (b3) and dispersed in continuous phase (β1), usually, the dispersed phase (β) is dispersed in this continuous phase (α') in a state where the continuous phase (β1) and the fine dispersed phase (β2) dispersed in continuous phase (β1) are formed in the dispersed phase (β). When the polyolefin composition (b) has such a multiple dispersed phase structure, a polypropylene resin composition having superior impact resistance can be obtained.

In addition, in a case where a propylene/ethylene block copolymer having a dispersed phase of an ethylene polymer block is used as the propylene-based polymer (a1), it is possible to agglomerate at least a part of the ethylene polymer block that is contained in the block copolymer in the interface between the continuous phase (α') and the dispersed phase (β). When the propylene-based polymer (a1) has such a phase structure, a polypropylene resin composition having superior impact resistance can be obtained.

The size of the dispersed phase (β) that is contained in the continuous phase (α') of the polypropylene resin composition is not particularly limited as long as the effect of the present invention is exhibited, but is usually the same as the suitable aspect of the size of the dispersed phase (β) of the polyolefin composition (b).

In addition, in a case where the fine dispersed phase (β2) has been formed in the dispersed phase (β) of the polypropylene resin composition of the present invention, the size thereof is not particularly limited as long as the effect of the present invention is exhibited, but is usually the same as the suitable aspect of the size of the fine dispersed phase (β2) of the polyolefin composition (b).

In the polypropylene resin composition of the present invention, it is considered that the acid-modified polypropylene (c) is localized in the periphery of the filler (a2). On the other hand, in a polypropylene resin composition not containing the acid-modified polypropylene (c), there is a tendency that the dispersed phase (β) in the polyolefin composition (b) is localized in the periphery of the filler (a2). Due to such a difference in the phase structure, the polypropylene resin composition of the present invention enables a polypropylene resin composition having superior stiffness to be obtained compared with a polypropylene resin composition not containing the acid-modified polypropylene (c).

In a case where the polypropylene resin composition of the present invention contains the ethylene-based copolymer (d), the ethylene-based copolymer (d) preferably forms a dispersed phase (γ) in the continuous phase (α'). This dispersed phase (γ) is formed. When this phase structure is formed, there is a tendency that the balance between the stiffness and impact resistance of the resulting polypropylene resin composition is superior. In a case where the dispersed phase (γ) of the ethylene-based copolymer (d) is formed in the polypropylene resin composition of the present invention, the size of the dispersed phase (γ) is not particularly limited as long as the effect of the present invention is exhibited, and the average diameter (average particle diameter) is preferably 100 nm or more and 1000 nm or less, more preferably 100 nm or more and 500 nm or less, and still more preferably 100 nm or more and 300 nm or less. The average diameter of this dispersed phase (γ) is an average value (nm) of the maximum lengths of 100 fine dispersed phase (γ) freely selected from an image that is obtained using an electron microscope.

In the polypropylene resin composition of the present invention, based on the sum of the continuous phase (α') and the dispersed phase (β) of 100 mass%, the dispersed phase (β) is 80 mass% or less. Therefore, usually, in a case where the total amount of the propylene-based polymer (a1) and the polyolefin (b1) is denoted as W_{a1+b1}, and the total amount of the aliphatic polyamide resin (b2) and the modified elastomer (b3) is denoted as W_{b2+b3}, the proportion of W_{b2+b3} is 80 mass% or less (usually, 0.5 mass% or more) relative to 100 mass% of the sum of W_{a1+b1} and W_{b2+b3}. When the ratio of the amounts is set within the above range, it is possible to make all of the impact resistance, stiffness, and moldability of the resulting polypropylene resin composition superior. From this viewpoint, the proportion is preferably 1 mass% or more and 78 mass% or less, more preferably 3 mass% or more and 77 mass% or less, still more preferably 5 mass% or more and 76 mass% or less, far still more preferably 8 mass% or more and 75 mass% or less, particularly preferably 10 mass% or more and 72 mass% or less, more particularly preferably 15 mass% or more and 67 mass% or less, and especially preferably 25 mass% or more and 63 mass% or less.

In the polypropylene resin composition of the present invention, the content proportion of each of the propylene-based polymer (a1) and the polyolefin (b1) is not particularly limited as long as the effect of the present invention is exhibited, and the content proportion of the polyolefin (b1) is usually 80 mass% or less, preferably 1 mass% or more and 60 mass% or less, more preferably 3 mass% or more and 40 mass% or less, still more preferably 5 mass% or more and 30 mass% or less, and far still more preferably 10 mass% or more and 25 mass% or less relative to 100 mass% of the total of the propylene-based polymer (a1) and the polyolefin (b1).

The specific gravity of the polypropylene resin composition of the present invention is not particularly limited and is usually 1.05 or less, preferably 0.89 or more and 1.05 or less, and more preferably 0.92 or more and 0.98 or less. The polypropylene resin composition of the present invention has such a specific gravity, but has superior impact resistance and stiffness to those of polyethylene resins alone or polypropylene resins alone when compared with these resins.

In the polypropylene resin composition of the present invention, based on the total content of the propylene-based polymer composition (a), the polyolefin composition (b), and the modified polypropylene (c) of 100 parts by mass, it is preferable that the content of the propylene-based polymer composition (a) is 50 to 94.9 parts by mass, the content of the polyolefin composition (b) is 5 to 49.9 parts by mass, and the content of the modified polypropylene (c) is 0.1 to 15 parts by mass, it is more preferable that the content of the propylene-based polymer composition (a) is 55 to 90.5 parts by mass, the content of the polyolefin composition (b) is 8 to 40 parts by mass, and the content of the modified polypropylene (c) is 1 to 12 parts by mass, and it is still more preferable that the content of the propylene-based polymer composition (a) is 60 to 80 parts by mass, the content of the polyolefin composition (b) is 10 to 29 parts by mass, and the content of the modified polypropylene (c) is 2.5 to 11 parts by mass. When the respective components are contained in such blending proportions, there is a tendency that the balance between the stiffness and impact resistance of the resulting polypropylene resin composition is more superior.

In addition, in the polypropylene resin composition of the present invention, based on the total content of the propylene-based polymer composition (a), the polyolefin composition (b), and the modified polypropylene (c) of 100 parts by mass, it is preferable that the content of the propylene-based polymer composition (a) is 50 to 94.9 parts by mass, the content of the polyolefin composition (b) is 4 to 49.9 parts by mass, and the content of the modified polypropylene (c) is 0.1 to 5 parts by mass, it is more preferable that the content of the propylene-based polymer composition (a) is 50 to 94.9 parts by mass, the content of the polyolefin composition (b) is 5 to 49.9 parts by mass, and the content of the modified polypropylene (c) is 0.1 to 5 parts by mass, it is still more preferable that the content of the propylene-based polymer composition (a) is 60 to 90 parts by mass, the content of the polyolefin composition (b) is 6 to 35 parts by mass, and the content of the modified polypropylene (c) is 0.5 to 4 parts by mass, and it is far still more preferable that the content of the propylene-based polymer composition (a) is 65 to 88 parts by mass, the content of the polyolefin composition (b) is 8 to 30 parts by mass, and the content of the modified polypropylene (c) is 1 to 3.5 parts by mass. When the respective components are contained in such blending proportions, there is a tendency that the balance between the stiffness and impact resistance of the resulting polypropylene resin composition is more superior.

The polypropylene resin composition of the present invention can be produced, for example, as follows.

For example, the propylene-based polymer composition (a) and the polyolefin composition (b) are fabricated by the above-described methods or the like. After that, the propylene-based polymer composition (a), the polyolefin composition (b), the acid-modified polypropylene (c), different polymers that are added as necessary, such as the ethylene-based copolymer (d), and an additive are melt-kneaded, whereby the polypropylene resin composition can be produced. In addition, the polypropylene resin composition may also be produced by adding the propylene-based polymer (a1) and the filler (a2) instead of the propylene-based polymer composition (a), that is, by melt-kneading the propylene-based polymer (a1), the filler (a2), the polyolefin composition (b), the acid-modified polypropylene (c), different polymers that are added as necessary, such as the ethylene-based copolymer (d), and an additive.

A melt kneading method is not particularly limited, and examples thereof include methods in which the respective components are melt-kneaded using a kneading device such as an extruder (a single screw extruder, a twin screw extruder, or the like), a kneader, or a mixer (a high-speed flow mixer, a paddle mixer, a ribbon mixer, or the like). These devices may be used singly, or two or more thereof may be used in combination.

In addition, during the melt kneading, the respective components may be injected in a lump and melt-kneaded or the respective components may be injected in installments and melt-kneaded.

The temperature during the melt kneading can be set as appropriate depending on the kind or the like of a resin being used, the respective components are desirably kneaded in a molten state, and the temperature is usually 190°C to 350°C, preferably 200°C to 330°C, and more preferably 205°C to 310°C.

The polypropylene resin composition of the present invention can be made into a molded article by a variety of heat forming. The molded article obtained as described above normally has the above-described phase structure formed in the polypropylene resin composition. Therefore, the resulting molded article has excellent balance between stiffness and impact resistance. Examples of a method for the heat forming include injection molding, extrusion molding, blow molding, injection blow molding, inflation molding, hollow molding, vacuum molding, compression molding, press molding, stamping molding, transfer molding, and the like.

The molded article may be produced by only one molding method or may be produced by combining two or more molding methods.

The polypropylene resin composition of the present invention can be used in a variety of uses. For example, the polypropylene resin composition of the present invention can be used as a variety of supplied and the like that are used in vehicles such as automobiles, railway vehicles (vehicles in general), aircraft fuselages (fuselages in general), ships and hulls (hulls in general), and bicycles (vehicles in general). Examples of automobile supplies include exterior parts, interior parts, engine parts, electrical parts, and the like.

### Examples

The present invention will be more specifically described below based on Examples, but the present invention is not limited to these Examples.

### [Production Examples]

### <Production Example 1> Preparation of maleic anhydride graft-modified ethylene/1-butene copolymer (modified elastomer (b3-1))

A maleic anhydride graft-modified ethylene/1-butene copolymer (modified elastomer (b3-1)) was produced using an ethylene/1-butene copolymer shown in Table 1 below.

**[Table 1]**

| Item | Unit | Polymer properties of ethylene/1-butene copolymer | |
|---|---|---|---|
| density | kg/m³ | | 861 |
| MFR (190°C, 2.16 kg load) | g/10 minute | | 0.5 |
| M F R (230°C, 2.16 kg load) | g/10 minute | | 0.9 |
| Mw/Mn | - | | 2.0 |

Ten kg of the ethylene/1-butene copolymer and a solution in which 110 g of maleic anhydride and 6 g of 2,5-dimethyl-2,5-bis(tert-butylperoxy)hexene-3 were dissolved in 80 g of acetone were blended together in a Henschel mixer.

The obtained blended product was injected into a twin screw melt kneading extruder (manufactured by The Japan Steel Works, Ltd., screw diameter: 30 mm, L/D = 42) and extruded in a strand shape at a resin temperature of 260°C and an amount of extrusion of 7 kg/hr. Next, the blended product was cooled with water and then pelletized, thereby obtaining a maleic anhydride graft-modified ethylene/1-butene copolymer (hereinafter, also referred to as "modified elastomer").

The MFR (190°C, 2.16 kg load) of the obtained modified elastomer was 0.6 g/10 min, the MFR (230°C, 2.16 kg load) was 1.2 g/10 min, the density was 866 kg/m³, and the amount of the maleic anhydride grafted measured after the extraction of the unreacted maleic anhydride with acetone was 0.99 mass%.

### <Production Example 2> Preparation of polyolefin composition (b-1)

PA6 (Nylon 6 resin, manufactured by Toray Industries, Inc., product name "AMIRAN CM1007", melting point: 225°C) was used as an aliphatic polyamide resin (b2), the modified elastomer (b3-1) obtained in Production Example 1 was used as a modified elastomer (b3), and pellets of these were dry-blended so that PA6/modified elastomer (b3-1) reached 44.4/55.6 mass% and then injected into the twin screw melt kneading extruder (manufactured by The Japan Steel Works, Ltd., screw diameter: 30 mm, L/D = 42). Next, mixing was performed under conditions of a kneading temperature of 245°C, an extrusion rate of 15 kg/h, and a screw rotation speed of 200 rotations/min, and furthermore, the extruded mixed resins were cut using a pelletizer to fabricate mixed resin pellets.

Next, a polypropylene resin (homopolypropylene, manufactured by Prime Polymer Co., Ltd., product name "PRIME POLYPRO J106G", melting point: 163°C) (hereinafter, also referred to as "hPP") was used as a polyolefin (b1) and dry-blended with the previously obtained mixed resin pellets so that hPP/mixed resin pellets reached 55/45 mass% and then injected into the twin screw melt kneading extruder (manufactured by The Japan Steel Works, Ltd., screw diameter: 30 mm, L/D = 42). Next, mixing was performed under conditions of a kneading temperature of 245°C, an extrusion rate of 15 kg/h, and a screw rotation speed of 200 rotations/min, and furthermore, the extruded polyolefin composition was cut using the pelletizer to fabricate pellets of a polyolefin composition (b-1).

### <Production Example 3> Preparation of propylene-based polymer composition (a-1)

A propylene/ethylene block copolymer having a dispersed phase of an ethylene block (manufactured by Prime Polymer Co., Ltd., product name "PRIME POLYPRO J739E", n-decane insoluble component at 23°C: 89 mass%, n-decane soluble component at 23°C: 11 mass%, [η] of n-decane soluble component at 23°C: 6.2 dl/g, MFR: 54 g/10 min (230°C, 2.16 kg load)) (hereinafter, also referred to as "bPP") as a propylene-based polymer (a1) and a talc-containing polypropylene resin, which is an inorganic filler (a2-1), (manufactured by Asada Milling Co., Ltd., product name "HG-170", talc content: 70 wt%) (hereinafter, also referred to as "talc MB") were used, dry-blended so that bPP/talc MB reached 80/20 mass%, and then injected into the twin screw melt kneading extruder (manufactured by The Japan Steel Works, Ltd., screw diameter: 30 mm, L/D = 42). Next, mixing was performed under conditions of a kneading temperature of 200°C, an extrusion rate of 15 kg/h, and a screw rotation speed of 200 rotations/min, and furthermore, the extruded mixed resins were cut using a pelletizer to fabricate pellets of a propylene-based polymer composition (a-1).

### <Production Example 4> Preparation of propylene-based polymer compositions (a-2-1) and (a-2-2)

Pellets of propylene-based polymer compositions (a-2-1) and (a-2-2) were fabricated in the same manner as in Production Example 3 except that a cellulose fiber (manufactured by Nippon Paper Industries Co., Ltd., product name "KC FLOCK W-50GK"), which is a natural fiber (a-2-2), was used instead of talc and dry-blended so that bPP/cellulose fiber reached 90/10 mass% (propylene-based polymer composition (a-2-1)) or 80/20 mass% (propylene-based polymer composition (a-2-2)).

### [Examples 1 to 3]

### (1) Preparation of polypropylene resin composition

The propylene-based polymer composition (a-1) obtained in Production Example 3 as the propylene-based polymer composition (a), the polyolefin composition (b-1) obtained in Production Example 2 as the polyolefin composition (b), and a maleic anhydride-modified polypropylene (c-1) (manufactured by Mitsui Chemicals, Inc., product name "ADMER AT2606", MF: 220 g/10 min (230°C, 2.16 kg load), density: 900 kg/m³) as an acid-modified polypropylene (c) were used, dry-blended so that the formulation became as shown in Table 2, and then injected into the twin screw melt kneading extruder (manufactured by The Japan Steel Works, Ltd., screw diameter: 30 mm, L/D = 42). Next, mixing was performed under conditions of a kneading temperature of 200°C, an extrusion rate of 15 kg/h, and a screw rotation speed of 200 rotations/min, and furthermore, the extruded polypropylene resin composition was cut using the pelletizer to fabricate pellets of a polypropylene resin composition.

### (2) Fabrication of test piece for physical property measurement

The pellets of the polypropylene resin composition obtained in (1) was injected into a hopper of a 50-ton injection molding machine (manufactured by Meiki Co., Ltd.), and test pieces for a bending test, a tensile test, a Charpy impact test, and a deflection temperature under load measurement were injection-molded under injection conditions of a set temperature of 200°C and a mold temperature of 40°C. Similarly, square plates for a puncture impact test and a Rockwell hardness measurement were injection-molded using a 70-ton injection molding machine (manufactured by Meiki Co., Ltd.) under injection conditions of a set temperature of 200°C and a mold temperature of 40°C.

### (3) Charpy impact strength

A hammer was swung down from a notched rear surface of the fixed test piece under the following test conditions, and an impact strength was obtained from the angle of rise of the hammer after the destruction of the test piece and the angle of lift of the hammer before the test.

### (Test conditions)

Test temperature: 23°C/-30°C, hammer capacity: 4 J, angle of lift: 149.9, test piece: notched, remaining width: 8 mm, width: 4 mm

### (4) Deflection temperature under load

A specified test load (0.45 MPa) was applied to the test piece under the following test conditions, and the temperature was raised in a heat transfer medium, and a temperature at which the deflection amount reached 0.34 mm was obtained.

### (Test conditions)

Test starting temperature: 35.0°C, temperature rise rate: 120°C/h, test piece: 80 mm in length, 10 mm in width, and 4 mm in thickness, test piece direction: flatwise, test load: 0.45 MPa

### (5) Rockwell hardness

A test load was applied to the test piece for 15 seconds under the following test conditions, and the test load was removed. The hardness was obtained based on the indentation depth after 15 seconds from the removal of the test load.

### (Test conditions)

Test temperature: 23°C, test load: 60 kg, scale: HRR, test piece: two 3 mm-thick injection square plates laminated together

### (6) Evaluation of stiffness (measurement of bending modulus)

The bending modulus was measured according to JIS K 7171 using the test piece obtained in the (2). The results are shown in Table 2. This bending modulus was measured by bearing a load from the point of action (curvature radius: 5 mm) disposed at the center between the fulcrums at a rate of 2 mm/min while supporting the test piece with two fulcrums (curvature radius: 5 mm) having a distance between fulcrums (L) of 64 mm.

### (7) Tensile strength

Measurement was performed under the following test conditions, and the tensile elongation at break (between chucks) and the tensile modulus were obtained.

### (Test conditions)

Measurement temperature: 23°C, test rate: 50 mm/min, test piece: ISO 527 1A, distance between chucks: 115 mm Et = (σ2 - σ1)/(ε2 - ε1)
Et: Tensile modulus (MPa)
σ₁: stress (MPa) at strain ε₁ = 0.0005 (0.05%)
σ₂: stress (MPa) at strain ε₂ = 0.0025 (0.25%)

(As the strain, strain between the chucks was used)

### (8) Puncture impact test

Measurement was performed under the following test conditions, and maximum impact force point displacement/energy and puncture point displacement/energy were obtained.

### (Test conditions)

Test temperature: 23°C/-30°C, test rate: 5 m/sec, striker diameter: 0.5 inches, support stand diameter: 3 inches, test piece: about 1 mm-thick injection square plate

The displacement at a point where the stress was maximized in the stress-displacement curve obtained in the test was regarded as the maximum impact force point displacement, and the integrated value of the curve from the test start point to the above point was regarded as the maximum impact force point energy. In addition, a point where the displacement was larger than that at the maximum impact force point and the stress reached 1/2 of the maximum impact force point was regarded as the puncture point, the displacement thereof was regarded as the puncture point displacement, and the integrated value of the curve from the test start point to the above point was regarded as the puncture point energy.

### [Examples 4 to 7]

Pellets of polypropylene resin compositions were made, test pieces for physical property measurement were injection-molded, and evaluation was performed in the same manner as in Examples 1 to 3 except that an ethylene/1-butene copolymer (manufactured by Mitsui Chemicals, Inc., product name "TAFMER DF610", density: 862 kg/m³) was used as an ethylene-based copolymer (d) in addition to the propylene-based polymer composition (a-1), the polyolefin composition (b-1), and the maleic anhydride-modified polypropylene used in Examples 1 to 3 and dry-blended so that the formulation became as shown in Table 2. The results are shown in Table 2.

### [Examples 8 to 10]

Pellets of polypropylene resin compositions were made, test pieces for physical property measurement were injection-molded, and evaluation was performed in the same manner as in Examples 1 to 3 except that the propylene-based polymer composition (a-1), which is the propylene-based polymer composition (a), was changed to the propylene-based polymer composition (a-2-1) or (a-2-2) fabricated in Production Example 4, and the blending proportions of the respective components were made to be as shown in Table 3. The results are shown in Table 3.

### [Examples 11 and 12]

Pellets of polypropylene resin compositions were made, test pieces for physical property measurement were injection-molded, and evaluation was performed in the same manner as in Examples 1 to 3 except that the propylene-based polymer composition (a-1), which is the propylene-based polymer composition (a), was changed to the propylene-based polymer composition (a-2-2) fabricated in Production Example 4, and the blending proportions of the respective components were made to be as shown in Table 4. The results are shown in Table 4.

### [Examples 13 and 14]

Pellets of polypropylene resin compositions were made, test pieces for physical property measurement were injection-molded, and evaluation was performed in the same manner as in Examples 1 to 3 except that the propylene-based polymer composition (a-1), which is the propylene-based polymer composition (a), was changed to the propylene-based polymer composition (a-2-2) fabricated in Production Example 4, the maleic anhydride-modified polypropylene (c-1), which is the acid-modified polypropylene (c), was changed to a maleic anhydride-modified polypropylene (c-2) (manufactured by Mitsui Chemicals, Inc., product name "ADMER AT3190", MF: 235 g/10 min (190°C, 2.16 kg load), density: 900 kg/m³), and the blending proportions of the respective components were made to be as shown in Table 4. The results are shown in Table 4.

### [Comparative Example 1]

A test piece for physical property measurement was injection-molded, and evaluation was performed in the same manner as in Examples 1 to 3 except that only the propylene-based polymer composition (a-1) obtained in Production Example 3 was used. The results are shown in Table 2.

### [Comparative Examples 2 to 4]

Pellets of polypropylene resin compositions were made, test pieces for physical property measurement were injection-molded, and evaluation was performed in the same manner as in Examples 1 to 3 except that the propylene-based polymer composition (a-1) obtained in Production Example 3 as the propylene-based polymer composition (a) and the polyolefin composition (b-1) obtained in Production Example 2 as the polyolefin composition (b) were used and dry-blended so as to be blended as shown in Table 2. The results are shown in Table 2.

### [Comparative Examples 5 to 8]

Pellets of polypropylene resin compositions were made, test pieces for physical property measurement were injection-molded, and evaluation was performed in the same manner as in Examples 1 to 3 except that the propylene-based polymer composition (a-1) obtained in Production Example 3 as the propylene-based polymer composition (a), the polyolefin composition (b-1) obtained in Production Example 2 as the polyolefin composition (b), and an ethylene-based elastomer were used and dry-blended so as to be blended as shown in Table 2. The results are shown in Table 2.

### [Comparative Examples 9 to 11]

Pellets of polypropylene resin compositions were made, test pieces for physical property measurement were injection-molded, and evaluation was performed in the same manner as in Comparative Examples 5 to 8 except that the propylene-based polymer composition (a-1), which is the propylene-based polymer composition (a), was changed to the propylene-based polymer composition (a-2-1) or (a-2-2) fabricated in Production Example 4, and the respective components were dry-blended so that the blending proportions became as shown in Table 3. The results are shown in Table 3.

**[Table 2]**

| | Item | Unit | Comparative Example 1 | Comparative Example 2 | Comparative Example 3 | Comparative Example 4 | Comparative Example 5 | Comparative Example 6 | Comparative Example 7 | Comparative Example 8 |
|---|---|---|---|---|---|---|---|---|---|---|
| Propylene-based polymer composition (a) | Propylene-based polymer composition (a-1) (base resin: bPP, talc content: 14 mass%) | Mass% | 100 | 90 | 80 | 70 | 80 | 70 | 75 | 65 |
| Polyolefin composition (b) | hPP | Mass% | | 5.5 | 11 | 16.5 | 5.5 | 11 | 5.5 | 11 |
| | PA6 | Mass% | | 2 | 4 | 6 | 2 | 4 | 2 | 4 |
| | Maleic acid-modified elastomer | Mass% | | 2.5 | 5 | 7.5 | 2.5 | 5 | 2.5 | 5 |
| Ethylenic copolymer (d) | Ethylenic elastomer | Mass% | | | | | 10 | 10 | 15 | 15 |
| Modified polypropylene (c) | Modified PP (c-1) (AT2606) | phr | | | | | | | | |
| | Charpy impact test (23°C) | kJ/m² | 4.8 | 6.0 | 9.0 | 11.7 | 13.2 | 18.3 | 20.7 | 38.5 |
| | Deflection temperature under load (0.45 MPa) | °C | 126 | 107 | 101 | 95 | 90 | 84 | 82 | 77 |
| | Rockwell hardness | - | 100 | 93 | 89 | 85 | 76 | 71 | 65 | 58 |
| | Bending modulus (secant) | MPa | 2780 | 1850 | 1590 | 1410 | 1280 | 1120 | 1080 | 960 |
| Characteristic evaluation | Tensile elongation at break (between chucks) | % | 16 | 29 | 36 | 56 | 45 | 49 | 51 | 62 |
| | Tensile modulus | MPa | 2820 | 1950 | 1720 | 1500 | 1280 | 1160 | 1080 | 950 |
| | Maximum impact point displacement | mm | 13.2 | 15.0 | 16.2 | 16.8 | 16.7 | 17.6 | 17.5 | 18.0 |
| | Maximum impact point energy | J | 6.5 | 7.8 | 9.0 | 9.5 | 8.3 | 8.8 | 8.4 | 8.5 |
| | Puncture point displacement | mm | 13.5 | 15.4 | 16.8 | 18.0 | 18.8 | 20.0 | 19.8 | 20.6 |
| | Puncture point energy | J | 6.9 | 8.4 | 9.6 | 10.9 | 10.4 | 11.2 | 10.6 | 11.0 |
| | Sample thickness | mm | 1.27 | 1.27 | 1.27 | 1.27 | 1.27 | 1.27 | 127 | 1.26 |

| | Item | Unit | Example 1 | Example 2 | Example 3 | Example 4 | Example 5 | Example 6 | Example 7 | |
|---|---|---|---|---|---|---|---|---|---|---|
| Propylene-based polymer composition (a) | Propylene-based polymer composition (a-1) (base resin: bPP, talc content: 14 mass%) | Mass% | 90 | 80 | 70 | 80 | 70 | 75 | 65 | |
| Polyolefin composition (b) | hPP | Mass% | 5.5 | 11 | 16.5 | 5.5 | 11 | 5.5 | 11 | |
| | PA6 | Mass% | 2 | 4 | 6 | 2 | 4 | 2 | 4 | |
| | Maleic acid-modified elastomer | Mass% | 2.5 | 5 | 7.5 | 2.5 | 5 | 2.5 | 5 | |
| Ethylenic copolymer (d) | Ethylenic elastomer | Mass% | | | | 10 | 10 | 15 | 15 | |
| Modified polypropylene (c) | Modified PP (c-1) (AT2606) | phr | 3 | 3 | 3 | 3 | 3 | 3 | 3 | |
| | Charpy impact test (23°C) | kJ/m² | 5.8 | 7.6 | 10.6 | 8.3 | 12.7 | 10.8 | 16.0 | |
| | Deflection temperature under load (0.45 MPa) | °C | 124 | 115 | 107 | 111 | 102 | 105 | 96 | |
| | Rockwell hardness | - | 98 | 94 | 90 | 83 | 77 | 75 | 68 | |
| | Bending modulus (secant) | MPa | 2320 | 2000 | 1700 | 1810 | 1530 | 1590 | 1340 | |
| Characteristic evaluation | Tensile elongation at break (between chucks) | % | 23 | 35 | 45 | 34 | 53 | 49 | 74 | |
| | Tensile modulus | MPa | 2320 | 2090 | 1760 | 1880 | 1620 | 1650 | 1360 | |
| | Maximum impact point displacement | mm | 14.3 | 14.7 | 16.1 | 16.3 | 16.5 | 16.5 | 17.5 | |
| | Maximum impact point energy | J | 7.3 | 7.8 | 9.0 | 8.3 | 8.4 | 8.0 | 8.4 | |
| | Puncture point displacement | mm | 14.4 | 15.1 | 16.8 | 17.0 | 18.4 | 18.1 | 19.7 | |
| | Puncture point energy | J | 7.6 | 8.2 | 9.8 | 9.0 | 10.2 | 9.4 | 10.3 | |
| | Sample thickness | mm | 1.25 | 1.25 | 1.24 | 1.24 | 1.24 | 1.24 | 1.23 | |

**[Table 3]**

| | Item | Unit | Example 8 | Example 9 | Example 10 | Comparative Example 9 | Comparative Example 10 | Comparative Example 11 |
|---|---|---|---|---|---|---|---|---|
| Propylene-based polymer composition (a) | Propylene-based polymer composition (a-2-1) (base resin: bPP, cellulose fiber content: 10 mass%) | Mass% | 80 | | | 80 | | |
| Propylene-based polymer composition (a) | Propylene-based polymer composition (a-2-2) (base resin: bPP, cellulose fiber content: 20 mass%) | Mass% | | 80 | 70 | | 80 | 70 |
| Polyolefin composition (b) | hPP | Mass% | 11 | 11 | 16.5 | 11 | 11 | 16.5 |
| | PA6 | Mass% | 4 | 4 | 6 | 4 | 4 | 6 |
| | Maleic acid-modified elastomer | Mass% | 5 | 5 | 7.5 | 5 | 5 | 7.5 |
| Ethylenic copolymer (d) | Ethylenic elastomer | Mass% | | | | | | |
| Modified polypropylene (c) | Modified PP (c-1) (AT2606) | phr | 3 | 3 | 3 | | | |
| | Charpy impact test (23°C) | kJ/m² | 6.1 | 5.0 | 6.2 | 5.4 | 4.4 | 5.6 |
| | Deflection temperature under load (0.45 MPa) | °C | 106 | 114 | 109 | 97 | 102 | 96 |
| | Rockwell hardness | - | 93 | 91 | 87 | 82 | 86 | 83 |
| | Bending modulus (secant) | MPa | 1480 | 1680 | 1550 | 1380 | 1550 | 1350 |
| Characteristic evaluation | Tensile elongation at break (between chucks) | % | 10 | 9 | 11 | 11 | 8 | 11 |
| | Tensile modulus | MPa | 1460 | 1660 | 1520 | 1350 | 1500 | 1350 |
| | Maximum impact point displacement | mm | 7.9 | 7.2 | 7.8 | 6.9 | 6.8 | 5.6 |
| | Maximum impact point energy | J | 1.3 | 0.9 | 1.2 | 0.6 | 0.5 | 0.4 |
| | Puncture point displacement | mm | 8.6 | 7.8 | 8.6 | 7.6 | 7.4 | 6.4 |
| | Puncture point energy | J | 1.5 | 1.3 | 1.5 | 0.8 | 0.7 | 0.5 |
| | Sample thickness | mm | 1.16 | 1.17 | 1.15 | 1.15 | 1.14 | 1.16 |

**[Table 4]**

| | Item | Unit | Example 11 | Example 12 | Example 13 | Example 14 |
|---|---|---|---|---|---|---|
| Propylene-based polymer composition (a) | Propylene-based polymer composition (a-2-1) (base resin: bPP, cellulose fiber content: 10 mass%) | Mass% | | | | |
| Propylene-based polymer composition (a) | Propylene-based polymer composition (a-2-2) (base resin: bPP, cellulose fiber content: 20 mass%) | Mass% | 80 | 80 | 80 | 80 |
| Polyolefin composition (b) | hPP | Mass% | 11 | 11 | 11 | 11 |
| | PA6 | Mass% | 4 | 4 | 4 | 4 |
| | Maleic acid-modified elastomer | Mass% | 5 | 5 | 5 | 5 |
| Ethylenic copolymer (d) | Ethylenic elastomer | Mass% | | | | |
| Modified polypropylene (c) | Modified PP (c-1) (AT2606) | phr | 5 | 10 | | |
| | Modified PP (c-2) (AT3190) | phr | | | 3 | 5 |
| | Charpy impact test (23°C) | kJ/m² | 4.4 | 4.2 | 4.7 | 6.1 |
| | Deflection temperature under load (0.45 MPa) | °C | 116 | 118 | 114 | 116 |
| | Rockwell hardness | - | 92 | 93 | 89 | 85 |
| | Bending modulus (secant) | MPa | 1740 | 1740 | 1630 | 1490 |
| Characteristic evaluation | Tensile elongation at break (between chucks) | % | 9 | 9 | 10 | 13 |
| | Tensile modulus | MPa | 1740 | 1800 | 1650 | 1500 |
| | Maximum impact point displacement | mm | 7.1 | 7.4 | 8.0 | 9.1 |
| | Maximum impact point energy | J | 0.8 | 0.9 | 1.0 | 1.4 |
| | Puncture point displacement | mm | 7.7 | 8.1 | 8.7 | 9.8 |
| | Puncture point energy | J | 1.1 | 1.1 | 1.3 | 1.7 |
| | Sample thickness | mm | 1.15 | 1.14 | 1.17 | 1.15 |

## Claims

1. A polypropylene resin composition, comprising a propylene-based polymer composition (a), a polyolefin composition (b), and an acid-modified polypropylene (c),
wherein the propylene-based polymer composition (a) contains a propylene-based polymer (a1) and a filler (a2),
the polyolefin composition (b) contains a polyolefin (b1), an aliphatic polyamide resin (b2), and a modified elastomer (b3) and
has a continuous phase (α) containing the polyolefin (b1), and a dispersed phase (β) containing the aliphatic polyamide resin (b2) and the modified elastomer (b3) and dispersed in the continuous phase (α),
the dispersed phase (β) is composed of a melt-kneaded product of the aliphatic polyamide resin (b2) and the modified elastomer (b3),
the modified elastomer (b3) is an elastomer in which a portion containing a group having reactivity against the aliphatic polyamide resin (b2) is added to a non-modified elastomer (b3'), and the non-modified elastomer (b3') is an olefin-based thermoplastic elastomer having a structural unit derived from ethylene and a structural unit derived from an α-olefin having 3 to 8 carbon atoms, or a styrene-based thermoplastic elastomer having a structural unit derived from a styrene-based compound, and
based on a sum of the continuous phase (α) and the dispersed phase (β) of 100 mass%, the dispersed phase (β) is 80 mass% or less.

2. The polypropylene resin composition according to claim 1, wherein the filler (a2) is an inorganic filler (a2-1).

3. The polypropylene resin composition according to claim 1, wherein the filler (a2) is a natural fiber (a2-2).

4. The polypropylene resin composition according to claim 1, wherein the propylene-based polymer (a1) is a propylene/ethylene block copolymer having a dispersed phase of an ethylene polymer block.

5. The polypropylene resin composition according to claim 2, wherein the inorganic filler (a2-1) is one or more inorganic fillers selected from the group consisting of talc, mica, a glass fiber, and calcium carbonate.

6. The polypropylene resin composition according to claim 3, wherein the natural fiber (a2-2) is one or more natural fibers selected from the group consisting of a cellulose fiber, a wood powder, and a wood powder fiber.

7. The polypropylene resin composition according to claim 1, wherein the polyolefin (b1) is a propylene homopolymer.

8. The polypropylene resin composition according to claim 1, wherein the aliphatic polyamide resin (b2) is one or more aliphatic polyamide resins selected from the group consisting of Polyamide 6, Polyamide 11, Polyamide 12, Polyamide 612, Polyamide 610, and Polyamide 1010.

9. The polypropylene resin composition according to claim 1, wherein the dispersed phase (β) has a continuous phase (β1) containing the aliphatic polyamide resin (b2), and a fine dispersed phase (β2) containing the modified elastomer (b3) and dispersed in the continuous phase (β1).

10. The polypropylene resin composition according to any one of claims 1 to 9, wherein a content of the propylene-based polymer composition (a) is 50 to 94.9 parts by mass, a content of the polyolefin composition (b) is 5 to 49.9 parts by mass, and a content of the modified polypropylene (c) is 0.1 to 15 parts by mass, provided that a total content of the propylene-based polymer composition (a), the polyolefin composition (b), and the modified polypropylene (c) is 100 parts by mass.

11. The polypropylene resin composition according to any one of claims 1 to 9, wherein a content of the propylene-based polymer composition (a) is 50 to 94.9 parts by mass, a content of the polyolefin composition (b) is 5 to 49.9 parts by mass, and a content of the modified polypropylene (c) is 0.1 to 5 parts by mass, provided that a total content of the propylene-based polymer composition (a), the polyolefin composition (b), and the modified polypropylene (c) is 100 parts by mass.
